# EUROPÄISCHE PATENTANMELDUNG

(11) **EP 1 777 256 A1**
(43) Veröffentlichungstag der Anmeldung: **25.04.2007**
(21) Anmeldenummer: 05023100.0
(22) Anmeldetag: 22.10.2005
(51) Int. Cl.: C08K 5/39, C08K 5/41, B60C 17/00, B60C 17/06

(54) **Fahrzeugluftreifen mit Seitenwand-Verstärkungsprofil**

(71) Anmelder: Continental Aktiengesellschaft, 30165 Hannover (DE)
(72) Erfinder: Recker, Carla, Dr., 30167 Hannover (DE); Katrakova, Danka, Dr., 30419 Hannover (DE)

(57) **Zusammenfassung**

Die Erfindung betrifft Fahrzeugluftreifen in radialer Bauart mit einem profilierten Laufstreifen (1), einem mehrlagigen Gürtelverband (2), einer Innenschicht (4), einer zumindest einlagig ausgeführten Karkasse (3), welche um Wulstkerne (6) und Wulstprofile (7) in Wulstbereichen (5) geführt ist, Seitenwänden (8) und mit zumindest je einem im Bereich jeder Seitenwand (8) eingebrachten, im Querschnitt mondsichelförmigen Verstärkungsprofil (9), welches sich jeweils zumindest über einen Großteil der Seitenwandlänge erstreckt und aus zumindest einer vulkanisierten Kautschukmischung gebildet ist.

Für verbessertes Pannenlaufverhalten ist die Kautschukmischung des im Querschnitt mondsichelförmigen Verstärkungsprofils (9) mit Hilfe zumindest eines bifunktionellen Vemetzers unter Bildung von 1,ω-Dithioalkandiyl-Netzknoten vulkanisiert.

## Beschreibung

Die Erfindung betrifft Fahrzeugluftreifen in radialer Bauart mit einem profilierten Laufstreifen, einem mehrlagigen Gürtelverband, einer Innenschicht, einer zumindest einlagig ausgeführten Karkasse, welche um Wulstkerne und Wulstprofile in Wulstbereichen geführt ist, Seitenwänden und mit zumindest je einem im Bereich jeder Seitenwand eingebrachten, im Querschnitt mondsichelförmigen Verstärkungsprofil, welches sich jeweils zumindest über einen Großteil der Seitenwandlänge erstreckt und aus zumindest einer vulkanisierten Kautschukmischung gebildet ist.

Derartige im Pannenfall selbsttragende Fahrzeugluftreifen sind in unterschiedlichen Ausführungen schon seit längerem bekannt. Die im Bereich der Seitenwände des Reifens eingebauten Verstärkungsprofile werden bezüglich ihrer Querschnittsform und bezüglich diverser Eigenschaften ihrer elastomeren Mischung derart ausgeführt, dass sie in der Lage sind, den Reifen bei einem plötzlichen Druckverlust, also im Pannenfall, auf eine gewisse Zeit bzw. über eine gewisse Laufleistung selbsttragend zu erhalten, so dass eine Weiterfahrt möglich ist. Ein selbsttragender Reifen der eingangs genannten Art ist beispielsweise aus der DE 29 43 654 A1 bekannt. Der Reifen ist im Bereich seiner Seitenwände jeweils mit einem ein- oder mehrteiligen, etwa mondsichelförmigen Verstärkungsprofil versehen, welches zwischen der Innenschicht und der Karkasslage angeordnet ist und bis unterhalb des Gürtels und bis in die Nähe der Wulstbereiche verläuft.

Das Seitenwand-Verstärkungsprofil, auch SSR-Insert (self supporting runflat-insert) genannt, eines im Pannenfall selbsttragenden Reifens ist in der Regel aus einer harten Mischung gebildet, damit der Reifen auch ohne Luft über eine bestimmte Distanz gefahren werden kann und nicht vollständig einfällt, wodurch er auf der Felge läuft und dadurch völlig zerstört wird. Gleichzeitig darf sich die Mischung des Seitenwand-Verstärkungsprofils im Pannenlauf nicht zu stark erwärmen, damit es nicht durch Reversion der Mischung des Verstärkungsprofils zu einer Zerstörung des Verstärkungsprofils kommt. Im Normallauf soll der Reifen mit dem Seitenwand-Verstärkungsprofil sich jedoch möglichst wenig hinsichtlich seiner Fahreigenschaften und seinem Gewicht von einem üblichen Reifen unterscheiden.

Es ist bekannt, dass man harte Mischungen, die als Seitenwand-Verstärkungsprofil eingesetzt werden können, durch Erhöhung der Menge an Ruß als Füllstoff oder durch einen hohen Vernetzungsgrad der Mischung mit Hilfe von großen Mengen an Vernetzungsreagenzien und Beschleunigern herstellen kann. Die Erhöhung der Rußmenge geht allerdings mit schlechtem Verarbeitungsverhalten und starker Erwärmung bei dynamischer Beanspruchung einher, während die Erhöhung des Vernetzungsgrades durch herkömmliche Vernetzung mit Schwefel die Stabilität bei hohen Temperaturen stark beeinträchtigt.

In der EP 1 577 339 A1 werden Kautschukmischungen für das Seitenwand-Verstärkungsprofil von im Pannenfall selbsttragenden Reifen vorgeschlagen, die 10 bis 100 Gewichtsteile Ruß und zumindest 2 Gewichtsteile Vernetzungsagens, bezogen auf 100 Gewichtsteile Kautschuk enthalten, wobei der Kautschuk 10 bis 50 Gew.-% eines speziellen sternförmigen, lösungspolymerisierten Polybutadiens aufweist. In den Beispielen werden Naturkautschuk und Polybutadien im Verschnitt eingesetzt und es wird mit einem herkömmlichen Schwefel-Beschleuniger-System vernetzt.

Ausgehend von diesem Stand der Technik liegt der Erfindung die Aufgabe zugrunde, im Pannenfall selbsttragende Fahrzeugluftreifen bereitzustellen, die sich durch ein verbessertes Pannenlaufverhalten auszeichnen, d. h. die über eine längere Strecke und/oder mit höherer Geschwindigkeit im Pannenfall gefahren werden können.

Gelöst wird diese Aufgabe erfindungsgemäß dadurch, dass die Kautschukmischung des im Querschnitt mondsichelförmigen Verstärkungsprofils mit Hilfe zumindest eines bifunktionellen Vernetzers unter Bildung von 1,ω-Dithioalkandiyl-Netzknoten vulkanisiert ist.

Es hat sich überraschenderweise herausgestellt, dass sich mit der Vernetzung über 1,ω-Dithioalkandiyl-Netzknoten, auch Carbasulfan-Netzknoten genannt, Vulkanisate herstellen lassen, die sich durch eine besonders hohe dynamische Haltbarkeit bei hohen Temperaturen (T > 120 °C) bei gleichzeitig hoher Steifigkeit und geringer Reversionsneigung herstellen lassen. Thermische und dynamische Haltbarkeit werden durch die speziellen Ausbildung von 1,ω-Dithioalkandiyl-Netzknoten vereint und die Hitze- und Alterungsbeständigkeit werden verbessert. Ein Reifen mit einem mondsichelförmigen Verstärkungsprofil aus einer derartigen Mischung zeigt daher verbesserte Pannenlaufleistung.

Das mondsichelförmige Verstärkungsprofil kann bei Verwendung der vorgenannten Mischung konstruktiv weniger hart, z. B. dünner, ausgelegt werden, ohne dass Pannenlauffähigkeit beeinträchtigt wird, dadurch kann gleichzeitig das Komfortverhalten des Reifens verbessert werden.

Als bifunktionelle Vernetzer können alle Vernetzer eingesetzt werden, die in Kautschukmischungen zur Bildung von 1,ω-Dithioalkandiyl-Netzknoten führen. Bevorzugt werden solche bifunktionellen Vernetzer eingesetzt, die zur Bildung von 1,6-Dithiohexandiyl-Netzknoten führen. Derartige Vernetzer bieten ein ausgewogenes Verhältnis von Molekulargewicht und Prozessfähigkeit und sind in größeren Mengen herstellbar. Beispiele für die einsetzbaren bifunktionellen Vernetzer finden sich beispielsweise in der EP 0 530 590 B1, der EP 0 601 303 B1, der EP 0 385 072 B1 und der EP 0 432 417 A2.

Als besonders geeignete Vernetzer im Hinblick auf die Verbesserung das Pannenlaufs bei Reifen haben sich 1,6-Bis(N,N'-dibenzylthio-carbamoyldithio)-hexan, erhältlich beispielsweise unter dem Namen Vulcuren® VP KA 9188 von LANXESS, oder Dinatrium-Hexamethylen-1,6-bis(thiosulfat)-dihydrat, erhältlich beispielsweise unter dem Namen Duralink HTS von FLEXSYS, erwiesen. Diese können als einzige Vernetzer oder in Kombination miteinander oder mit anderen bifunktionellen Vernetzern eingesetzt werden. 1,6-Bis(N,N'-dibenzylthio-carbamoyldithio)-hexan bietet dabei zusätzlich den Vorteil, dass die Molekülbausteine, die nicht für die Bildung der 1,ω-Dithioalkandiyl-Netzknoten benötigt werden, als vulkanisationsbeschleunigende Fragmente wirken.

Gemäß einer bevorzugten Weiterbildung der Erfindung wird die Kautschukmischung des im Querschnitt mondsichelförmigen Verstärkungsprofils mit Hilfe von 1 bis 10 phr, vorzugsweise 2 bis 5 phr, des bifunktionellen Vernetzers vulkanisiert. Man erhält auf diese Weise ein Netzwerk, das ein Optimum an dynamischer Haltbarkeit bei hohen Temperaturen und eine hohe Steifigkeit gewährleistet.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Um die Eigenschaften des im Querschnitt mondsichelförmigen Verstärkungsprofils weiter zu bessern und preiswerter zu gestalten, hat es sich als sinnvoll erwiesen, wenn die Kautschukmischung des Verstärkungsprofils zusätzlich und gleichzeitig mit Schwefel und zumindest einem Vulkanisationsbeschleuniger für die Schwefelvulkanisation vulkanisiert ist. Der Schwefel wird dabei bevorzugt in Mengen von 0,2 bis 6 phr eingesetzt.

Als Vulkanisationsbeschleuniger können alle dem Fachmann für die Schwefelvulkanisation bekannten Beschleuniger, insbesondere Sulfenamidbeschleuniger wie Benzothiazyl-2-cyclohexyl-sulfenamid (CBS), eingesetzt werden. Es können auch mehrere Vulkanisationsbeschleuniger gleichzeitig verwendet werden. Um die Temperaturstabilität der Vulkanisate weiter zu erhöhen und die Scorchsicherheit (Sicherheit vor frühzeitigem Anvulkanisieren) zu verbessern, wird vorzugsweise N-t-butyl-2-benzothiazol-sulfenimid (TBSI) eingesetzt.

Gemäß einer weiteren bevorzugten Ausgestaltung der Erfindung wird als Vulkanisationsbeschleuniger in der Kautschukmischung für das im Querschnitt mondsichelförmige Verstärkungsprofil Tetrabenzylthiuramdisulfid (TBzTD) eingesetzt. Es hat sich herausgestellt, dass mit Tetrabenzylthiuramdisulfid als Beschleuniger bei der Schwefelvulkanisation besonders viele thermisch stabile S₁-Netzknoten erzielt werden und ein ausgewogenes Maß an thermisch stabilen Netzknoten in Kombination mit thermisch und dynamisch stabilen 1,ω-Dithioalkandiyl-Netzknoten aus bifunktionellen Vernetzern eine besonders hohe Pannenlaufleistung gewährleistet. Besonders vorteilhaft für die Festigkeit des Verstärkungsprofils ist scheinbar, dass lange Polymerverknüpfungsketten neben sehr kurzen Ketten vorliegen und keine statische Verteilung über die Länge der Polymerverknüpfungsketten, wie sie bei herkömmlicher Schwefelvulkanisation gebildet wird, vorhanden ist.

Die Kautschukmischung für das im Querschnitt mondsichelförmige Verstärkungsprofil des Fahrzeugluftreifens enthält als Kautschuk vorzugsweise Naturkautschuk (NR) und/oder Polybutadien (BR). Enthält die Kautschukmischung als Dienkautschuk Polybutadien (BR), kann es sich dabei sowohl um cis-1,4- als auch um 1,2-Polybutadien (sowohl in syndiotaktischer als auch in ataktischer Form) handeln.

Die Kautschukmischung für das im Querschnitt mondsichelförmige Verstärkungsprofil kann aber auch noch weitere Kautschuke, insbesondere Dienkautschuke, wie z. B. synthetisches Polyisopren (IR), Acrylnitril-Butadien-Kautschuk (NBR), Chlorprenkautschuk (CR), Styrol-Isopren-Butadien-Terpolymer (SIBR), Isopren-Butadien-Kautschuk, Styrol-Isopren-Kautschuk oder Styrol-Butadien-Copolymer (SBR), enthalten.

Um die Erwärmung des im Querschnitt mondsichelförmigen Verstärkungsprofils im Pannenfall weiter zu verringern, enthält die Mischung für das Verstärkungsprofil 40 bis 90 phr, vorzugsweise 50 bis 70 phr, hysteresearmen Ruß mit einer Jodadsorptionszahl von weniger als 100 g/kg. Es können z. B. Ruße des Typs N339, N660, N550 oder Gemische aus diesen Rußen eingesetzt werden.

Die Kautschukmischung für das im Querschnitt mondsichelformige Verstärkungsprofil kann weitere in der Kautschukindustrie übliche Zuschlagstoffe, wie beispielsweise weitere Füllstoffe (z. B. Kieselsäure, Aluminiumoxide, Alumosilicate, Aluminiumhydroxid, Schichtsilikate, Kreide, Stärke, Magnesiumoxid, Titandioxid und/oder Kautschukgele), Kupplungsagenzien zur Anbindung der Füllstoffe an den Kautschuk, Weichmacher, Alterungsschutzmittel, Aktivatoren, Wachse, Harze und Mastikationshilfsmittel, enthalten. Die Zuschlagstoffe werden in üblichen Mengen eingesetzt.

Für die Herstellung des erfindungsgemäßen Fahrzeugluftreifens wird die Kautschukmischung für das im Querschnitt mondsichelförmige Verstärkungsprofil extrudiert und im Reifenrohlingsbau in üblicher Weise aufgelegt. Der Rohling wird im Anschluss vulkanisiert.

Als besonders vorteilhaft für die Pannenlaufeigenschaften hat es sich ferner erwiesen, wenn neben dem im Querschnitt mondsichelförmigen Verstärkungsprofil auch die Wulstprofile (Kemprofile, Apex) auf einer Kautschukmischung basieren, die mit Hilfe zumindest eines bifunktionellen Vernetzers unter Bildung von 1,ω-Dithioalkandiyl-Netzknoten vulkanisiert sind. Mondsichelförmiges Verstärkungsprofil und Wulstprofil basieren vorzugsweise auf derselben Kautschukmischung. Auch die Wulstprofile werden im Pannenfall extremen thermischen Belastungen ausgesetzt und müssen dynamisch steif sein. Zusätzlich bietet die Verwendung von identischen Mischungen für verschiedene Reifenbauteile Verarbeitungs-, Lagerungs- und Kostenvorteile.

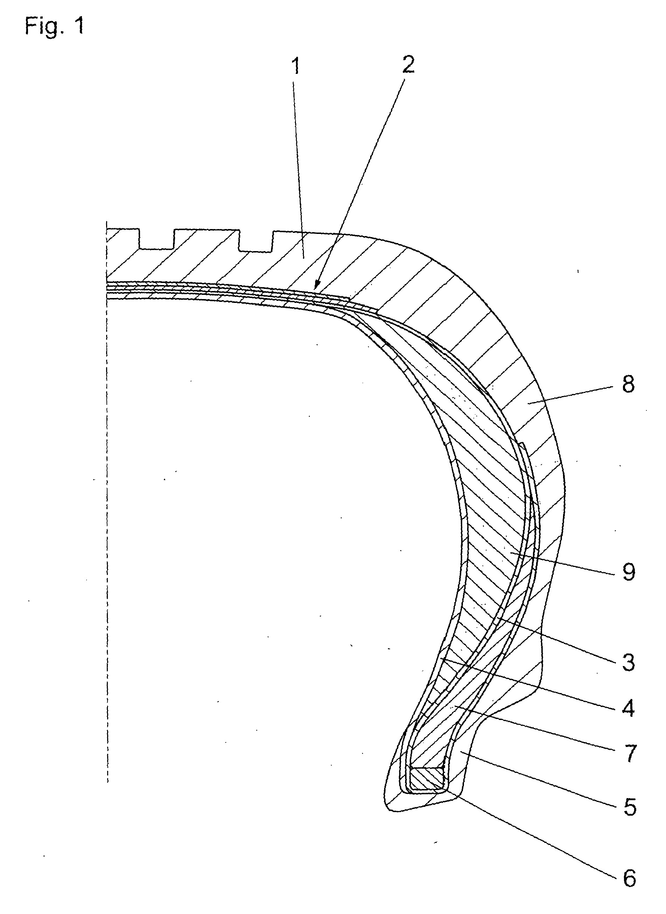

Anhand von Vergleichs- und Ausführungsbeispielen, die in der einzigen Zeichnungsfigur Fig. 1 und in den Tabellen 1 und 2 dargestellt sind, soll die Erfindung näher erläutert werden. Dabei zeigt Fig. 1 einen Teilquerschnitt durch einen Fahrzeugluftreifens radialer Bauart für Personenkraftwagen.

Gemäß des in Fig. 1 gezeigten Querschnitts sind beispielhaft die wesentlichen Bestandteile, aus welchen sich der dargestellte Fahrzeugluftreifen zusammensetzt, ein profilierter Laufstreifen 1, ein bei der gezeigten Ausführung aus zwei Lagen bestehender Gürtel 2, eine einlagig ausgeführte Karkasse 3, eine weitgehend luftdicht ausgeführte Innenschicht 4, Wülste 5 mit Wulstkernen 6 und Wulstkemprofilen (Kernprofilen, Apex) 7, sowie Seitenwände 8 und etwa mondsichelförmige Verstärkungsprofile 9. Die beiden Lagen des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage in kreuzender Anordnung zu den Stahlcorden der zweiten Lage orientiert sind und mit der Reifenumfangsrichtung jeweils einen Winkel zwischen 15° und 30° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6 von innen nach außen geführt, ihre Hochschläge verlaufen neben den Wulstkemprofilen 7 in Richtung Gürtel 2.

Die aus der vulkanisierten Kautschukmischung hergestellten Verstärkungsprofile 9 sind während des Aufbaus des Reifens auf der Innenschicht 4 positioniert worden und befinden sich daher zwischen dieser und der Karkasse 3. Die Dicke der Verstärkungsprofile 9 nimmt sowohl Richtung Gürtel 2 als auch Richtung Wulst 5 ab. Richtung Gürtel 2 reicht jedes Verstärkungsprofil 9 bis unter die Randbereiche desselben. Richtung Wulst 5 endet jedes Verstärkungsprofil 9 knapp oberhalb des Wulstkernes 6. Über den überwiegenden Bereich der Länge der Seitenwand ist jedes Verstärkungsprofil 9 nahezu konstant dick ausgeführt, seine Stärke am Punkt der maximalen Dicke ist von der Reifengröße und der Reifenart abhängig und kann 5 bis 12 mm betragen.

In einem Fahrzeugluftreifen können erfindungsgemäß ausgeführte Verstärkungsprofile mit weiteren Verstärkungsprofilen kombiniert werden. Möglich ist auch eine andere Anordnung der Verstärkungsprofile als jene in Fig. 1 gezeigte, beispielsweise nicht zwischen Innenschicht 4 und Karkasse 3, sondern zwischen Karkasse 3 und Seitenwand 8.

In den folgenden Tabellen 1 und 2 sind Vergleichs- und erfindungsgemäße Kautschukmischungen dargestellt, die für das im Querschnitt mondsichelförmige Verstärkungsprofil und ggf. das Wulstprofil eingesetzt werden können. Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. In der Tabelle 1 wurden die Vernetzer-, Vulkanisationsbeschleuniger- und Schwefelmengen variiert. Die übrigen Mischungsbestandteile blieben unverändert. Bei den Mischungsbeispielen der Tabelle 2 wurden zusätzlich noch die Kautschuk- und die Füllstoffzusammensetzung variiert.

**Tabelle 1**

| **Bestandteile** | **Einheit** | **1(V)** | **2(E)** | **3(E)** | **4(E)** | **5(E)** | **6(E)** | **7(E)** | **8(E)** |
|---|---|---|---|---|---|---|---|---|---|
| Naturkautschuk | phr | 30 | 30 | 30 | 30 | 30 | 30 | 30 | 30 |
| BR^{a} | phr | 70 | 70 | 70 | 70 | 70 | 70 | 70 | 70 |
| Ruß N660 | phr | 60 | 60 | 60 | 60 | 60 | 60 | 60 | 60 |
| Weichmacheröl | phr | 10 | 10 | 10 | 10 | 10 | 10 | 10 | 10 |
| Alterungsschutzmittel | phr | 3 | 3 | 3 | 3 | 3 | 3 | 3 | 3 |
| Zinkoxid | phr | 5 | 5 | 5 | 5 | 5 | 5 | 5 | 5 |
| Stearinsäure | phr | 1 | 2 | 2 | 1 | 1 | 1 | 1 | 1 |
| TBzTD | phr | 0,8 | 3 | 3 | 0,4 | 0,8 | 0,4 | 0,8 | 0,4 |
| CBS | phr | 2,25 | 0,3 | 0,3 | 1,13 | 2,25 | 1,13 | 2,25 | 1,13 |
| Schwefel 66,7 % in naphthenischem Öl | phr | 9 | 0,3 | 0,3 | 4,5 | 9 | 4,5 | 9 | 9 |
| bifunktioneller Vernetzer A^{b} | phr | - | 3,8 | - | - | - | 3,8 | 3,8 | 3,8 |
| bifunktioneller Vernetzer B^{c} | phr | - | - | 2,1 | 2,1 | 2,1 | - | - | - |

| | | | | | | | | | |
|---|---|---|---|---|---|---|---|---|---|
| ^{a} High-cis Polybutadien vom Nd-Typ ^{b} 1,6-Bis(N,N'-dibenzylthio-carbamoyldithio)-hexan, Vulcuren^{®} VP KA 9188, LANXESS, Deutschland ^{c} Dinatrium-Hexamethylen-1,6-bis(thiosulfat)-dihydrat, Duralink HTS, FLEXSYS N. V., Belgien | | | | | | | | | |

**Tabelle 2**

| **Bestandteile** | **Einheit** | **1(V)** | **9(E)** | **10(V)** | **11(E)** | **12(E)** |
|---|---|---|---|---|---|---|
| Naturkautschuk | phr | 30 | 25 | 25 | 25 | 25 |
| BR^{a} | phr | 70 | 75 | 35 | 35 | 35 |
| syndiotakt. BR^{d} | phr | - | - | 40 | 40 | 40 |
| Kieselsäure | phr | - | 8 | - | - | - |
| Ruß N660 | phr | 60 | 65 | 60 | 60 | 60 |
| Weichmacheröl | phr | 10 | 2,5 | 2,5 | 2,5 | 2,5 |
| Klebharze | phr | - | 3 | 4 | 4 | 4 |
| Alterungsschutzmittel | phr | 3 | 3 | 3 | 3 | 3 |
| Zinkoxid | phr | 5 | 5 | 5 | 5 | 5 |
| Stearinsäure | phr | 1 | 1 | 1 | 1 | 1 |
| Prozesshilfsmittel | phr | - | 3 | - | - | - |
| TBzTD | phr | 0,8 | 0,4 | 0,8 | 3,3 | 0,4 |
| CBS | phr | 2,25 | - | 2,25 | 0,55. | 1,13 |
| TBSI | phr | - | 1,1 | - | - | - |
| Schwefel 66,7 % in naphthenischem Öl | phr | 9 | 4,5 | 9 | 0,33 | 4,5 |
| bifunktioneller Vernetzer A^{b} | phr | - | 3,8 | - | 4,2 | 3,8 |
| Verzögerer CTP^{e} | phr | - | 0,2 | 0,4 | - | - |

| | | | | | | |
|---|---|---|---|---|---|---|
| ^{a} High-cis Polybutadien vom Nd-Typ ^{b} 1,6-Bis(N,N'-dibenzylthio-carbamoyldithio)-hexan, Vulcuren^{®} VP KA 9188, LANXESS, Deutschland ^{d} syndiotaktisches 1,2-Polybutadien ^{e} N-Cyclohexylthiophthalimid | | | | | | |

Die Mischungsherstellung erfolgte unter üblichen Bedingungen in zwei Stufen in einem Labortangentialmischer. Die Mooney-Viskositäten der Mischungen wurden gemäß DIN 53523 mit einem Scherscheibenviskosimeter bei 100 °C bestimmt und die Zeit bis zum Anstieg der Viskosität um 5 Mooney-Einheiten bei 130 °C als Maß für die Scorchsicherheit ermittelt. Ferner wurden die Umsatzzeiten bis zum Erreichen der relativen Vernetzungsgrade von 10 und 95 % (t₁₀, t₉₅) sowie die Reversionzeiten bis zu 99 % Reversion (t_{R99}) über ein rotorloses Vulkameter (MDR = Moving Disc Rheometer) gemäß DIN 53 529 bei 160 und 180 °C ermittelt. Auch die Differenz aus Maximalwert MHF und Minimalwert ML der Rheometerkurven wurde bei den beiden Temperaturen bestimmt. Aus sämtlichen Mischungen wurden Prüfkörper durch optimale Vulkanisation unter Druck bei 160 °C (Tabelle 3) oder durch Vulkanisation bei 160 °C über 20 min und bei 180 °C über 10 min (Tabellen 4 und 5) hergestellt und mit diesen Prüfkörpern für die Kautschukindustrie typische Materialeigenschaften bestimmt, die in den Tabellen 3, 4 und 5 aufgelistet sind. Die gleichen Eigenschaften der 20 min bei 160 °C vulkanisierten Prüfkörper wurden auch nach dreitägiger Alterung bei 100 °C in Luft gemessen (Tabellen 4 und 5). Für die Tests an Prüfkörpern wurden folgende Testverfahren angewandt:
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur und 70 °C gemäß DIN 53 504
- Reißdehnung bei Raumtemperatur gemäß DIN 53 504
- Spannungswerte bei 50 und 100% statischer Dehnung bei Raumtemperatur gemäß DIN 53 504
- Bruchenergiedichte bestimmt im Zugversuch nach DIN 53 504, wobei die Bruchenergiedichte die bis zum Bruch erforderliche Arbeit, bezogen auf das Volumen der Probe, ist
- dynamischer Speichermodul E' bei 50 und 200 °C gemäß DIN 53 513 aus Messung mit Variation der Temperatur bei dynamischer Verformungsamplitude von 1 % bei 6 % Vorverformung und 10 Hz

**Tabelle 3**

| **Eigenschaft** | **Einheit** | **1(V)** | **2(E)** | **3(E)** | **4(E)** | **5(E)** | **6(E)** | **7(E)** | **8(E)** |
|---|---|---|---|---|---|---|---|---|---|
| Mooney (ML 1+4) | - | 64,4 | 57,1 | 61,6 | 65,9 | 64,2 | 61,2 | 59,5 | 61,1 |
| Zeit bis 5 Mooney mehr | min | 8,7 | 10,8 | 9,2 | 8,8 | 7,1 | 10,9 | 8,3 | 9,2 |
| t₁₀ bei 160 °C | min | 1,46 | 2,05 | 1,48 | 1,21 | 1,03 | 1,87 | 1,37 | 1,51 |
| t₉₅ bei 160 °C | min | 2,78 | 6,75 | 8,55 | 2,71 | 2,24 | 4,03 | 3,08 | 2,75 |
| t_{R99} bei 160 °C | min | 5,38 | 18,3 | keine | 6,1 | 4,93 | 8,78 | 6,41 | 7,11 |
| MHF - ML bei 160 °C | dNm | 37,01 | 21,31 | 14,91 | 25,74 | 38,62 | 32,85 | 36,89 | 30,1 |
| t₁₀ bei 180°C | min | 0,55 | 0,73 | 0,54 | 0,44 | 0,43 | 0,66 | 0,53 | 0,56 |
| t₉₅ bei 180 °C | min | 1,07 | 2,43 | 2,49 | 1,02 | 0,79 | 1,45 | 0,84 | 0,92 |
| t_{R99} bei 180 °C | min | 1,8 | 6,82 | 27,69 | 2,27 | 1,51 | 3,67 | 1,5 | 1,59 |
| MHF - ML bei 180 °C | dNm | 33,06 | 20,8 | 13,44 | 23,81 | 36,24 | 30,84 | 30,47 | 27,93 |
| Härte bei RT | Shore A | 74,7 | 64,8 | 58,8 | 68,7 | 75,7 | 73 | 74,3 | 71,2 |
| Härte bei 70 °C | Shore A | 75,3 | 64,7 | 57,6 | 69,5 | 77,2 | 74 | 74,9 | 71,6 |
| Rüpra. bei RT | % | 76,1 | 70 | 61,1 | 74 | 75,5 | 76,2 | 76,3 | 74,3 |
| Rüpra. bei 70 °C | % | 77,1 | 71,5 | 63,5 | 76,7 | 77,8 | 76,2 | 75,9 | 73,2 |
| Zugfestigkeit bei RT | MPa | 6,2 | 7,5 | 11,1 | 9 | 6,9 | 6,2 | 6,8 | 9 |
| Reißdehnung bei RT | % | 100 | 202 | 387 | 208 | 101 | 109 | 107 | 168 |
| Spannungswert 50 % | MPa | 3,02 | 1,68 | 1,17 | 2,04 | 3,3 | 2,76 | 3,02 | 2,38 |
| Spannungswert 100 % | MPa | 6,89 | 3,34 | 2,05 | 4,04 | 6,9 | 6,14 | 7,14 | 5,28 |
| E' bei 50 °C | MPa | 9,444 | 7,898 | 7,102 | 8,599 | 10,79 | 10,43 | 10,08 | 9,12 |
| E' bei 200 °C | MPa | 8,895 | 8,057 | 6,521 | 8,522 | 11,04 | 11,87 | 11,49 | 10,27 |

**Tabelle 4**

| **Eigenschaft** | **Einheit** | **1(V)** | **2(E)** | **3(E)** | **4(E)** | **5(E)** | **6(E)** | **7(E)** | **8(E)** |
|---|---|---|---|---|---|---|---|---|---|
| 20 min, 160 °C | | | | | | | | | |
| Härte bei RT | Shore A | 71,2 | 64,6 | 58,9 | 67,2 | 74,1 | 72,6 | 73,1 | 69,9 |
| Härte bei 70 °C | Shore A | 71,9 | 64,9 | 58,3 | 67,3 | 74,7 | 73,6 | 74,1 | 70,4 |
| Rüpra. bei RT | % | 72,7 | 69,3 | 62,5 | 72 | 73,3 | 76,4 | 75 | 73,2 |
| Rüpra. bei 70 °C | % | 75,3 | 70,1 | 62,7 | 74,2 | 76,5 | 76,7 | 76,6 | 75,1 |
| Zugfestigkeit bei RT | MPa | 8,2 | 7,2 | 10 | 9,6 | 7,1 | 6,7 | 6,2 | 5,5 |
| Reißdehnung bei RT | % | 152 | 199 | 350 | 235 | 115 | 119 | 108 | 117 |
| Spannungswert 50 % | MPa | 2,42 | 1,65 | 1,17 | 1,86 | 2,93 | 2,68 | 2,74 | 2,25 |
| Spannungswert 100 % | MPa | 5,36 | 3,27 | 2,06 | 3,64 | 6,68 | 6,08 | 6,57 | 5,08 |

| **20 min, 160 °C, gealtert 3 d bei 100 °C** | | | | | | | | | |
|---|---|---|---|---|---|---|---|---|---|
| Härte bei RT | Shore A | 74,9 | 67,7 | 62,6 | 70 | 77 | 75,3 | 76,4 | 73,8 |
| Härte bei 70 °C | Shore A | 76,1 | 67,7 | 61,6 | 69,9 | 78 | 76,2 | 77,1 | 74,3 |
| Rüpra. bei RT | % | 70,1 | 68,6 | 62,9 | 71,9 | 72,8 | 71,4 | 72,4 | 70,9 |
| Rüpra. bei 70 °C | % | 73,9 | 71,1 | 65 | 73,5 | 75,8 | 75 | 75,6 | 72,5 |
| Zugfestigkeit bei RT | MPa | 7,3 | 8,3 | 7,8 | 8,7 | 7,1 | 6,4 | 5,8 | 7 |
| Reißdehnung bei RT | % | 102 | 199 | 251 | 183 | 94 | 96 | 77 | 108 |
| Spannungswert 50 % | MPa | 3,44 | 1,94 | 1,39 | 2,23 | 3,71 | 3,32 | 3,78 | 3,06 |
| Spannungswert 100 % | MPa | 7,98 | 3,9 | 2,56 | 4,55 | 0 | 0 | 0 | 7,09 |

| **10 min, 180 °C** | | | | | | | | | |
|---|---|---|---|---|---|---|---|---|---|
| Härte bei RT | Shore A | 66,5 | 63,2 | 57,8 | 64,3 | 70,3 | 70,1 | 66,8 | 65,5 |
| Härte bei 70 °C | Shore A | 66,6 | 63,4 | 57,1 | 64 | 71,1 | 70,4 | 66,9 | 65,4 |
| Rüpra. bei RT | % | 68 | 69,4 | 61,5 | 69,1 | 71 | 75 | 69,7 | 68,4 |
| Rüpra. bei 70 °C | % | 72,4 | 69,9 | 61,2 | 69,9 | 74,9 | 75,4 | 72,9 | 71,6 |
| Zugfestigkeit bei RT | MPa | 8,8 | 9,1 | 10,3 | 7,1 | 5,5 | 6,8 | 6,8 | 7,9 |
| Reißdehnung bei RT | % | 219 | 252 | 365 | 208 | 118 | 139 | 172 | 202 |
| Spannungswert 50 % | MPa | 1,72 | 1,55 | 1,12 | 1,61 | 2,26 | 2,27 | 1,78 | 1,71 |
| Spannungswert 100 % | MPa | 3,5 | 3,01 | 1,95 | 3,04 | 4,92 | 4,93 | 3,7 | 3,48 |

**Tabelle 5**

| **Eigenschaft** | **Einheit** | **1(V)** | **9(E)** | **10(V)** | **11(E)** | **12(E)** |
|---|---|---|---|---|---|---|
| Mooney (ML 1+4) | - | 64,4 | 75,7 | 59,7 | 59,2 | 61 |
| Zeit bis 5 Mooney mehr | min | 8,7 | - | 12,3 | 10,4 | 10,1 |
| t₁₀ bei 160 °C | min | 1,46 | 2,01 | 2 | 2,03 | 1,74 |
| t₉₅ bei 160 °C | min | 2,78 | 6,53 | 3,48 | 6,99 | 3,98 |
| t_{R99} bei 160 °C | min | 5,38 | keine | 6,32 | keine | 9,53 |
| MHF - ML bei 160 °C | dNm | 37,01 | 32,84 | 41,14 | 22,77 | 35,33 |
| t₁₀ bei 180 °C | min | 0,55 | - | 0,65 | 0,76 | 0,65 |
| t₉₅ bei 180 °C | min | 1,07 | - | 1,29 | 2,5 | 1,4 |
| t_{R99} bei 180 °C | min | 1,8 | - | 2,26 | 8,88 | 3,68 |
| MHF - ML bei 180 °C | dNm | 33,06 | - | 35,96 | 21,63 | 32,35 |

| **20 min, 160 °C** | | | | | | |
|---|---|---|---|---|---|---|
| Härte bei RT | Shore A | 71,2 | 78,3 | 75,7 | 69,9 | 76,5 |
| Härte bei 70 °C | Shore A | 71,9 | 77,4 | 76,2 | 69 | 76,2 |
| Rüpra. bei RT | % | 72,7 | 68,4 | 66,3 | 64,8 | 70,2 |
| Rüpra. bei 70 °C | % | 75,3 | 73,3 | 74 | 66 | 73,3 |
| Zugfestigkeit bei RT | MPa | 8,2 | 5,9 | 9,7 | 9 | 9,4 |
| Reißdehnung bei RT | % | 152 | 78,0 | 133 | 181 | 123 |
| Spannungswert 50 % | MPa | 2,42 | 3,9 | 3,26 | 2,18 | 3,46 |
| Spannungswert 100 % | MPa | 5,36 | 0 | 7,57 | 4,6 | 8,09 |

| **20 min, 160 °C, gealtert 3 d bei 100 °C** | | | | | | |
|---|---|---|---|---|---|---|
| Härte bei RT | Shore A | 74,9 | 80,5 | 79,6 | 72,7 | 79 |
| Härte bei 70 °C | Shore A | 76,1 | 80,2 | 79,7 | 71,9 | 79,1 |
| Rüpra. bei RT | % | 70,1 | 69,9 | 64,2 | 62,9 | 69 |
| Rüpra. bei 70 °C | % | 73,9 | 72,2 | 71,1 | 66,8 | 73,6 |
| Zugfestigkeit bei RT | MPa | 7,3 | 5,6 | 8,7 | 9,2 | 7,1 |
| Reißdehnung bei RT | % | 102 | 60,0 | 89 | 166 | 81 |
| Spannungswert 50 % | MPa | 3,44 | 5,0 | 4,81 | 2,58 | 4,39 |
| Spannungswert 100 % | MPa | 7,98 | 0 | | 5,44 | 0 |

| **10 min, 180 °C** | | | | | | |
|---|---|---|---|---|---|---|
| Härte bei RT | Shore A | 66,5 | - | 71 | 68,5 | 74,6 |
| Härte bei 70 °C | Shore A | 66,6 | - | 70,9 | 67,7 | 73,7 |
| Rüpra. bei RT | % | 68 | - | 61,5 | 64,5 | 69,1 |
| Rüpra. bei 70 °C | % | 72,4 | - | 69 | 65,8 | 73,6 |
| Zugfestigkeit bei RT | MPa | 8,8 | - | 8,3 | 10,3 | 9,3 |
| Reißdehnung bei RT | % | 219 | - | 158 | 216 | 140 |
| Spannungswert 50 % | MPa | 1,72 | - | 2,31 | 1,99 | 2,95 |
| Spannungswert 100 % | MPa | 3,5 | - | 4,99 | 4,11 | 6,71 |

Aus der Tabelle 3 wird ersichtlich, dass die erfindungsgemäßen Mischungen eine gute Scorchsicherheit aufweisen (Zeit bis 5 Mooney mehr ist hoch). Diese Scorchsicherheit spiegelt sich auch in den ausreichend großen Zeiten bis zu 10 %iger Vernetzung wider. Die hohen Zeiten t_{R99} belegen, dass die erfindungsgemäßen Mischungen sich unkritisch gegenüber Überheizung verhalten, und sind ein Indiz für hohe Temperaturstabilität der Vulkanisate. Für eine hohe Temperaturstabilität der Vulkanisate spricht auch, dass die Differenz zwischen (MHF - ML) bei 160 °C und (MHF - ML) bei 180 °C klein ist. Die Tabelle 5 belegt diese Vorteile,auch für die Mischungen 9(E), 11(E) und 12(E).

Als Maß für das Komfortverhalten eines Reifens mit Verstärkungsprofil dient der dynamische Speichermodul E' bei 50 °C. Je kleiner dieser Wert ist, desto besser ist das Komfortverhalten des Reifens. Als Maß für eine ausreichende Steifigkeit des Verstärkungsprofils im Pannenfall dient der dynamische Speichermodul E' bei 200 °C, der einen möglichst hohen Wert annehmen sollte. Aus der Tabelle 3 wird ersichtlich, dass mit bei den Mischungen 2(E) bis 8(E) der Komfort und/oder die Steifigkeit im Pannenfall im Vergleich zur Mischung 1(V) verbessert werden kann.

Aus den Tabellen 4 und 5 wird ferner ersichtlich, dass die Vulkanisateigenschaften der mit

E gekennzeichneten Mischungen, ausgehend von Vulkanisaten, die bei 160 °C über 20 min vulkanisiert wurden, sowohl durch Alterung an Luft als auch durch Vulkanisation bei höherer Temperatur weniger negativ beeinflusst werden als die mit V gekennzeichneten Mischungen. Auch dies belegt die hohe Temperaturstabilität der Mischungen.

Zu den Mischungen 10(V) und 9(E) wurden zusätzlich Überheizstudien in Anlehnung an das Temperaturverhalten des Verstärkungsprofils im Pannenlauf durchgeführt, d. h. es wurden Prüfkörper bei 160 °C und 180 °C über unterschiedliche Zeiträume vulkanisiert und an den erzeugten Prüfkörpern wieder typische Materialeigenschaften bestimmt, die in den Tabellen 6 und 7 dargestellt sind. Die Überheizstudien dienen auch der Ermittlung des Verhaltens der Mischungen bei hohen Heizzeiten bei der Vulkanisation. Selbsttragende Reifen mit einem im Querschnitt mondsichelförmigen Verstärkungsprofil werden in der Regel mit längeren Vulkanisationszeiten (Heizzeiten) vulkanisiert als Reifen konventionellen Aufbaus. Durch längere Heizzeiten kann es zu Bereichen hoher Überhitzung im Reifen, insbesondere in dickeren Bauteilen wie dem Verstärkungsprofil, kommen. Ist die Mischung unempfindlich gegenüber Überhitzung, konserviert die Mischung jedoch gleichmäßige Eigenschaften über den Profilquerschnitt auch bei unterschiedlichen räumlichen Ausheizgraden.

**Tabelle 6**

| **Eigenschaft** | **Einheit** | **10(V)** | **10(V)** | **10(V)** | **10(V)** | **9(E)** | **9(E)** | **9(E)** | **9(E)** |
|---|---|---|---|---|---|---|---|---|---|
| Vulk.-Temperatur | °C | 160 | 160 | 160 | 160 | 160 | 160 | 160 | 160 |
| Vulk.-Zeit | min | 10 | 26 | 38 | 51 | 9 | 24 | 38 | 52 |
| Härte bei RT | Shore A | 79.5 | 76.8 | 76.3 | 75.4 | 77.9 | 77.9 | 78.1 | 77.9 |
| Härte bei 70 °C | Shore A | 79.6 | 76.1 | 76.2 | 75.2 | 77.7 | 77.4 | 77.4 | 77.3 |
| Rüpra. bei RT | % | 67.1 | 64.7 | 63.7 | 62.6 | 70.4 | 70.0 | 70.8 | 70.5 |
| Rüpra. bei 70 °C | % | 67.1 | 64.7 | 63.7 | 62.6 | 70.4 | 70.0 | 70.8 | 70.5 |
| Zugfestigkeit bei RT | MPa | 9.0 | 10.4 | 9.6 | 9.8 | 6.0 | 5.6 | 5.1 | 5.5 |
| Reißdehnung bei RT | % | 98 | 131 | 130 | 139 | 82 | 78 | 73 | 76 |
| Spannungswert 50 % | MPa | 4.35 | 3.48 | 3.25 | 3.06 | 3.74 | 3.71 | 3.68 | 3.70 |
| Spannungswert 100 % | MPa | 10.31 | 8.16 | 7.61 | 7.10 | 0.00 | 0.00 | 0.00 | 0.00 |

**Tabelle 7**

| **Eigenschaft** | **Einheit** | **10(V)** | **10(V)** | **10(V)** | **10(V)** | **9(E)** | **9(E)** | **9(E)** | **9(E)** |
|---|---|---|---|---|---|---|---|---|---|
| Vulk.-Temperatur | °C | 180 | 180 | 180 | 180 | 180 | 180 | 180 | 180 |
| Vulk.-Zeit | min | 3 | 8 | 12 | 16 | 3 | 9 | 14 | 19 |
| Härte bei RT | Shore A | 76.8 | 74.3 | 73.2 | 72.9 | 76.1 | 76.0 | 75.6 | 75.4 |
| Härte bei 70 °C | Shore A | 76.7 | 73.8 | 72.3 | 72.0 | 75.4 | 75.1 | 75.2 | 74.9 |
| Rüpra. bei RT | % | 66.1 | 61.5 | 59.8 | 58.8 | 70.6 | 68.4 | 69.8 | 68.7 |
| Rüpra. bei 70 °C | % | 74.4 | 71.0 | 68.7 | 68.4 | 73.2 | 71.5 | 71.9 | 72.1 |
| Zugfestigkeit bei RT | MPa | 10.6 | 10.4 | 11.5 | 12.0 | 6.1 | 5.2 | 5.7 | 5.6 |
| Reißdehnung bei RT | % | 136 | 161 | 188 | 193 | 95 | 86 | 94 | 90 |
| Spannungswert 50 % | MPa | 3.42 | 2.76 | 2.52 | 2.57 | 3.20 | 3.12 | 3.06 | 3.13 |
| Spannungswert 100 % | MPa | 7.95 | 6.26 | 5.58 | 5.73 | 0.00 | 0.00 | 0.00 | 0.00 |

Auch aus den Tabellen 6 und 7 wird wieder ersichtlich, dass ein Überheizen der Mischung 9(E) im Vergleich zur Mischung 10(V) nicht zu einer negativen Beeinflussung der Vulkanisateigenschaften, insbesondere im Hinblick auf die Härte und den Spannungswert bei Dehnung, führt. Die Mischungen sind unempfindlich gegenüber Überheizen.

Ferner wurden Reifen der Dimension 245/45 R17 gebaut, die im Querschnitt mondsichelförmige Verstärkungsprofile im Seitenwandbereich einer Dicke von 9,6 mm aufwiesen, wobei die Verstärkungsprofile aus den Mischungen 10(V), 9(E), 11(E) und 12(E) gebildet wurden. Mit den Reifen wurde das Notlaufverhalten im Pannenfall untersucht, wobei sowohl die noch fahrbare Kilometerleistung ohne Luft bei einer Geschwindigkeit von 80 km/h auf einer Versuchstrommel als auch auf der Straße ermittelt wurde. Die Fahrleistung des Reifens mit der Mischung 10(V) als Verstärkungsprofil wurde dabei gleich 100 % gesetzt. Außerdem wurde das Komfortverhalten der Reifen im üblichen Fahrbetrieb (mit vorgeschriebenem Luftdruck) über subjektive Beurteilung bewertet. Die Ergebnisse der Reifenversuche sind in Tabelle 8 dargestellt.

**Tabelle 8**

| **Reifeneigenschaft** | **Einheit** | **10(V)** | **9(E)** | **11(E)** | **12(E)** |
|---|---|---|---|---|---|
| Notlaufdistanz auf Trommel | % | 100 | 160 | 120 | 150 |
| Notlaufdistanz auf Straße | % | 100 | 140 | 120 | 200 |
| Komfort | % | 100 | 105 | 100 | 100 |

Die Tabelle 8 belegt, dass Reifen mit Verstärkungsprofilen aus Mischungen, die einen bifunktionellen Vernetzer, der zur Bildung von 1,ω-Dithioalkandiyl-Netzknoten fähig ist, enthalten, die Pannenlauffähigkeit der Reifen sehr deutlich verbessern. Gleichzeitig verbleibt der Komfort auf hohem Niveau oder wird sogar noch verbessert.

## Patentansprüche

1. Fahrzeugluftreifen in radialer Bauart mit einem profilierten Laufstreifen (1), einem mehrlagigen Gürtelverband (2), einer Innenschicht (4), einer zumindest einlagig ausgeführten Karkasse (3), welche um Wulstkerne (6) und Wulstprofile (7) in Wulstbereichen (5) geführt ist, Seitenwänden (8) und mit zumindest je einem im Bereich jeder Seitenwand (8) eingebrachten, im Querschnitt mondsichelförmigen Verstärkungsprofil (9), welches sich jeweils zumindest über einen Großteil der Seitenwandlänge erstreckt und aus zumindest einer vulkanisierten Kautschukmischung gebildet ist,
**dadurch gekennzeichnet, dass** die Kautschukmischung des im Querschnitt mondsichelförmigen Verstärkungsprofils (9) mit Hilfe zumindest eines bifunktionellen Vernetzers unter Bildung von 1,ω-Dithioalkandiyl-Netzknoten vulkanisiert ist.

2. Fahrzeugluftreifen nach Anspruch 1, **dadurch gekennzeichnet, dass** die Kautschukmischung des im Querschnitt mondsichelförmigen Verstärkungsprofils (9) mit Hilfe zumindest eines bifunktionellen Vernetzers unter Bildung von 1,6-Dithiohexandiyl-Netzknoten vulkanisiert ist.

3. Fahrzeugluftreifen nach Anspruch 2, **dadurch gekennzeichnet, dass** zumindest einer der bifunktionellen Vernetzer 1,6-Bis(N,N'-dibenzylthio-carbamoyldithio)-hexan ist.

4. Fahrzeugluftreifen nach Anspruch 2 oder 3, **dadurch gekennzeichnet, dass** zumindest einer der bifunktionellen Vernetzer Dinatrium-Hexamethylen-1,6-bis(thiosulfat)-dihydrat ist.

5. Fahrzeugluftreifen nach zumindest einem der vorhergehenden Ansprüche, **dadurch gekennzeichnet, dass** die Kautschukmischung des im Querschnitt mondsichelförmigen Verstärkungsprofils (9) mit Hilfe von 1 bis 10 phr, vorzugsweise von 2 bis 5 phr, des bifunktionellen Vernetzers vulkanisiert ist.

6. Fahrzeugluftreifen nach zumindest einem der vorhergehenden Ansprüche, **dadurch gekennzeichnet, dass** die Kautschukmischung des im Querschnitt mondsichelförmigen Verstärkungsprofils (9) zusätzlich und gleichzeitig mit Schwefel und zumindest einem Vulkanisationsbeschleuniger vulkanisiert ist.

7. Fahrzeugluftreifen nach Anspruch 6, **dadurch gekennzeichnet, dass** Schwefel in Mengen von 0,2 bis 6 phr eingesetzt wird.

8. Fahrzeugluftreifen nach Anspruch 6 oder 7, **dadurch gekennzeichnet, dass** als Vulkanisationsbeschleuniger N-t-butyl-2-benzothiazol-sulfenimid (TBSI) eingesetzt wird.

9. Fahrzeugluftreifen nach zumindest einem der Ansprüche 6 bis 8, **dadurch gekennzeichnet, dass** als Vulkanisationsbeschleuniger Tetrabenzylthiuramdisulfid (TBzTD) eingesetzt wird.

10. Fahrzeugluftreifen nach zumindest einem der vorhergehenden Ansprüche, **dadurch gekennzeichnet, dass** die Kautschukmischung des im Querschnitt mondsichelförmigen Verstärkungsprofils (9) als Kautschuk Naturkautschuk und/oder Polybutadien enthält.

11. Fahrzeugluftreifen nach zumindest einem der vorhergehenden Ansprüche, **dadurch gekennzeichnet, dass** die Kautschukmischung des im Querschnitt mondsichelförmigen Verstärkungsprofils (9) 40 bis 90 phr, vorzugsweise 50 bis 70 phr, hysteresearmen Ruß mit einer Jodadsorptionszahl von weniger als 100 g/kg enthält.

12. Fahrzeugluftreifen nach zumindest einem der vorhergehenden Ansprüche, **dadurch gekennzeichnet, dass** die Wulstprofile (7) auf derselben Kautschukmischung basieren wie das im Querschnitt mondsichelförmige Verstärkungsprofil (9).
